(19) Europäisches Patentamt
European Patent Office
Office européen des brevets

(11) Publication number: **0 206 455 B1**

# (12) EUROPEAN PATENT SPECIFICATION

(45) Date of publication of the patent specification: **04.07.90**

(51) Int. Cl.[5]: **C10M 149/10**, C10M 149/02, C10M 145/02, C10M 151/02

(21) Application number: **86302420.4**

(22) Date of filing: **01.04.86**

(54) **Polymers of ethylenically unsaturated compounds, and lubricating oil containing said polymers as viscosity index improvers.**

(30) Priority: **24.04.85 US 726566**

(43) Date of publication of application: **30.12.86 Bulletin 86/52**

(45) Publication of the grant of the patent: **04.07.90 Bulletin 90/27**

(84) Designated Contracting States: **BE DE FR GB IT NL SE**

(56) References cited:
**DE-A- 1 238 215**
**FR-A- 1 446 001**
**GB-A- 1 330 266**

(73) Proprietor: **TEXACO DEVELOPMENT CORPORATION, 2000 Westchester Avenue, White Plains, New York 10650(US)**

(72) Inventor: **Kapuscinski, Maria Magdalena, 72 Rambler Road, Rd 3, Carmel, N.Y. 10512(US)**
Inventor: **Liu, Christopher Soundang, 43 Saddlerock Drive, Poughkeepsie, N.Y. 12603(US)**
Inventor: **Grina, Larry Dale, 57 Brandy Lane, Wappingers Falls, N.Y. 12590(US)**
Inventor: **Jones, Ronald Edward, P.O. Box 514, Glenham, N.Y. 12508(US)**

(74) Representative: **Wood, Anthony Charles et al, Urquhart-Dykes & Lord 91 Wimpole Street, London W1M 8AH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 206 455 B1

ACTORUM AG

## Description

This invention relates to lubricating compositions containing a major portion of lubricating oil and an additive, characterized in that the additive is a polymer comprising repeating units derived from an ethylenically unsaturated monomer and in particular to lubricating oils containing graft polymers. More particularly it relates to lubricating compositions characterized by improved dispersancy and viscosity index.

As is well known to those skilled in the art, it is possible to improve the properties of a lubricating oil by addition of various components. The viscosity index may be improved; the dispersancy may be improved. Continued efforts are being made to attain improvement in these and other properties, and to attain these improvements at reduced cost. It is an object of this invention to provide an improved lubricating composition. Other objects will be apparent to those skilled in the art.

In one embodiment, this invention provides a polymer as an additive having dispersancy and VI improving properties, which polymer comprises repeating units derived from an ethylenically-unsaturated compound, which is prepared by reacting

(i) a first reactant containing ethylenic unsaturation and an epoxide moiety, with
(ii) a second reactant containing a group of the formula
$-NH_2$ $-NHR^4$, -OH, -SH, or -COOH,
wherein
$R^4$ is alkyl, aralkyl, alkaryl, cycloalkyl, or aryl.

The first reactant employed in the process of this invention contains both ethylenic unsaturation and an epoxide moiety.

Preferably the first reactant has the formula:

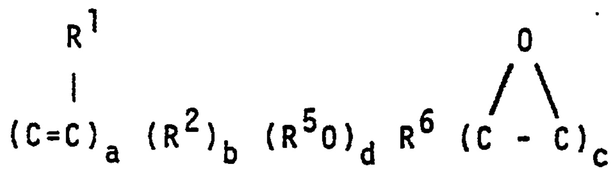

wherein
C=C is an ethylenically unsaturated double bond;
$R^5$ or $R^6$ is alkylene, alkarylene, aralkylene, cycloalkylene, or arylene;
$R^1$ is hydrogen, alkyl, alkaryl, aralkyl, cycloalkyl or aryl;
$R^2$ is a divalent moiety having the formula -COO- or $-R^5-$;
<u>a</u> is an integer greater than 0;
<u>b</u> is 0 or 1;
<u>c</u> is 1, 2 or 3; and
<u>d</u> is 0 or 1.

In the above formula, and throughout the present specification, any unfilled valence bonds may be linked to hydrogen atoms or inert substituents.

In the above formula, $R^1$ may be hydrogen or a hydrocarbon group selected from alkyl, aralkyl, cycloalkyl, aryl, and alkaryl, including such radicals when inertly substituted. Typical alkyl groups are methyl, ethyl, n-propyl, isopropyl, n-butyl, i-butyl, sec-butyl, amyl, octyl, decyl and octadecyl. Typical aralkyl groups are benzyl and beta-phenylethyl. Typical cycloalkyl groups are cyclohexyl, cycloheptyl, cyclooctyl, 3-methylcycloheptyl, 3-butylcyclohexyl and 3-methylcyclohexyl. Typical aryl groups are phenyl and naphthyl. Typical alkaryl groups are tolyl and xylyl. $R^1$ may be inertly substituted i.e. it may bear non-reactive substituents such as alkyl, aryl and cycloalkyl. A typically inertly substituted $R^1$ group is 4-methyl cyclohexyl. The preferred $R^1$ groups are $C_1$-$C_{10}$ alkyl groups, including e.g. methyl, ethyl, n-propyl, i-propyl, butyls, amyls, hexyls, octyls and decyls.

In the above formula, $R^5$ or $R^6$ may be a divalent hydrocarbon group selected from alkylene, aralkylene, cycloalkylene, arylene, and alkarylene, including such radicals when inertly substituted. Typical alkylene groups are methylene, ethylene, n-propylene, iso-propylene, n-butylene, i-butylene, sec-butylene, amylene, octylene, decylene and octadecylene. Typical arlkylene groups are benzylene and beta-phenylethylene. Typical cycloalkylene groups are cyclohexylene, cycloheptylene, cyclooctylene, 2-methylcycloheptylene, 3-butylcyclohexylene and 3-methylcyclohexylene. Typical alkarylene groups are tolylene and xylylene. $R^6$ may be inertly substituted i.e. it may bear a non-reactive substituent such as alkyl, aryl, cycloalkyl or ether. Typical inertly substituted $R^5$ or $R^6$ groups include 2-ethoxyethylene, carboethoxymethylene and 4-methyl cyclohexylene. The preferred $R^5$ or $R^6$groups are $C_1$-$C_{10}$ alkylene groups including e.g. methylene, ethylene, n-propylene, i-propylene, butylene, amylene, hexylene, octylene and decylene. $R^5$ and $R^6$ may typically be methylene ($-CH_2$).

In the above formula, $R^2$ is a divalent moiety having the formula -COO- or $-R^5-$. Preferably $R^2$ is -COO-.

a is an integer, greater than 0; and preferably a is 1. It is preferred that the double bond should not be on a carbon atom of the epoxy ring. Preferably there is only one ethylenic double bond in the molecule; and when there are more than one it is preferred that they be separated i.e. not adjacent or conjugated.

b is 0 or 1. When b is 0 and d is 1, it will be apparent that the composition includes an ether moiety. When b is 1 and d is 0, the composition includes an ester moiety if $R^2$ is -COO-.

c is an integer 1, 2 or 3. Preferably c is 1.

d is 0 or 1. When b and d are both zero, the composition includes a hydrocarbon moiety.

In its preferred aspects, the first reactant may contain the structural unit

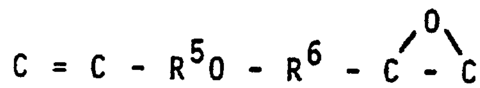

Typical first reactants include:
allyl glycidyl ether
2-methallyl glycidyl ether
glycidyl methacrylate
p-glycidyl styrene
styrene-p-glycidyl ether
3,4-epoxy-1-pentene and
3,4-epoxy-1-butene

The preferred first reactant is allyl glycidyl ether.

The second reactant employed in the process contains an active group selected from $-NH_2$, $-NHR^4$, -OH, -COOH, and -SH.

In the above compound $R^4$ is a hydrocarbon group selected from alkyl, aralkyl, cycloalkyl, aryl, and alkaryl, including such radicals when inertly substituted. Typical alkyl, cycloalkyl, aryl aralkyl and alkaryl groups are listed for $R^1$ above. $R^4$ may be inertly substituted i.e. it may bear a non-reactive substituent such as alkyl, aryl, cycloalkyl or ether. Typically inertly substituted $R^4$ groups include 2-ethoxyethyl, carboethoxymethyl and 4-methyl cyclohexyl, etc. The preferred $R^4$ groups are $C_1$-$C_{10}$ alkyl groups including e.g. methyl, ethyl, n-propyl, i-propyl, butyls, amyls, hexyls, octyls, decyls, $R^4$ is typically n-propyl.

Preferably the second reactant has the formula $HXR^3$

In this formula $R^3$ is hydrogen, or a heterocyclic group, or a hydrocarbon group selected from alkyl, aralkyl, cycloalkyl, aryl, and alkaryl, including such radicals when inertly substituted. Examples of such hydrocarbon groups are listed above for $R^1$.

When $R^3$ is a hydrocarbon, it is typically n-propyl.

When $R^3$ is heterocyclic, it may typically be for example in the form of a five or six membered ring containing one or more hetero atoms, such as N, O or S. Examples of such rings include furan, thiophene, pyrole, imidazole, thiazole, coumarone, thianaphthalene, indole, pyran, pyridine, quinoline, isoquinoline, morpholine, pyrimidine and piperazine, including such rings when hydrogenated or inertly substituted. Preferred are morpholine, piperazine, and pyrimidine rings.

In the above formula, X is -COO-, -S-, $-NR^4$, NH or -O-. The nitrogen, sulphur or oxygen may be a portion of a heterocyclic ring; or it may be in a group pendent thereon, e.g. a $-NR^4-$ group.

Typical compounds of the formula $HXR^3$ include:
N-(3-aminopropyl) morpholine
morpholine
2-6-dimethyl morpholine
2-amino-3-picoline
4-amino-2,6-dimethyl-pyrimidine
pyrimidine
N-hydroxyethyl-piperazine
2-amino-benzothiazole
N-methyl-piperazine
N-(3-aminopropyl)-2-pipecoline
pyrrolidine
N-(3-aminopropyl)-pyrrolidone
2-amino-pyrimidine
2 mercapto-pyrimidine
1-(2-dimethylamino-ethyl)-
5-mercapto-tetrazole
2,5-dimethylaniline
tetrazole-1-acetic acid

water
hydrogen sulphide
methyl mercaptan
thiophenol and
ethanol

The above monomers may be prepared by adding the first and second reactants, preferably in substantially equimolar quantities, to a reaction vessel with agitation. When $HXR^3$ has a melting point above room temperature, it is preferable to carry out the reaction in a diluent-solvent, e.g. one having a boiling point of 80 to 200°C. Typical solvents include tetrahydrofuran, octanol, isopropanol, dioxane and N,N-dimethylacetamide. The preferred solvents are commercial tetrahydrofuran, octanol, or N,N-dimethyl acetamide. Reaction is carried out at a temperature of, for example, 60 to 150°C, e.g. 110°C over a period of, for example, 0.5 to 5 hours, e.g. 2 hours. The product may then be cooled to room temperature and may be used without further purification or treatment.

Reaction typically proceeds as follows:

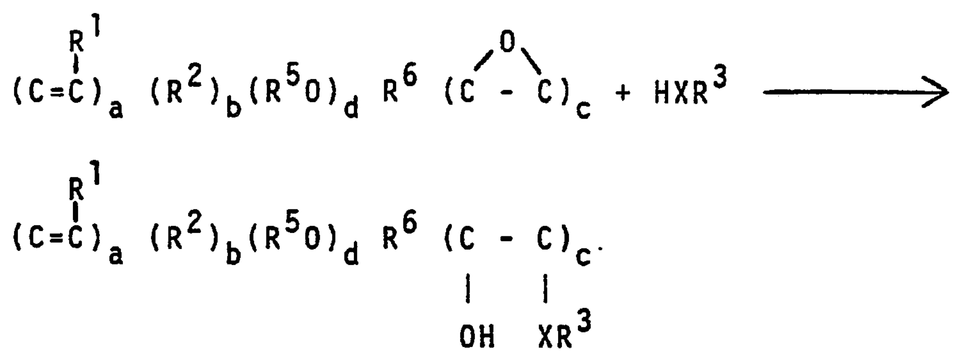

or more preferably

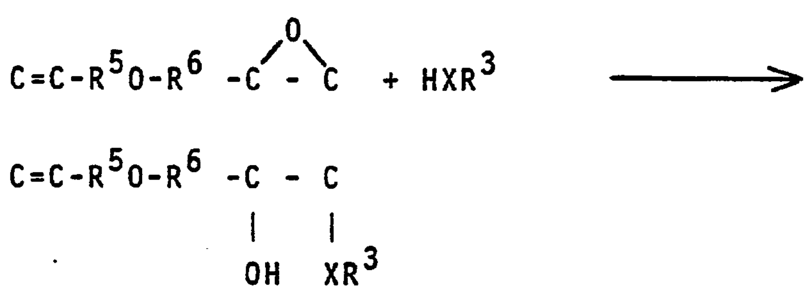

A typical specific example of the reaction is.

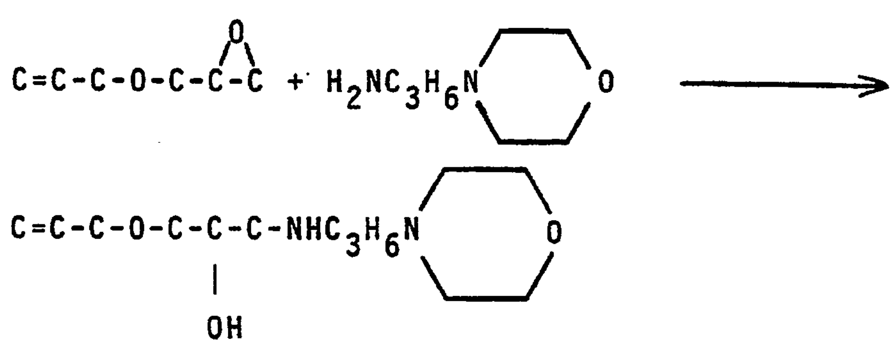

Typical specific monomer products which may be prepared include the following.

A. 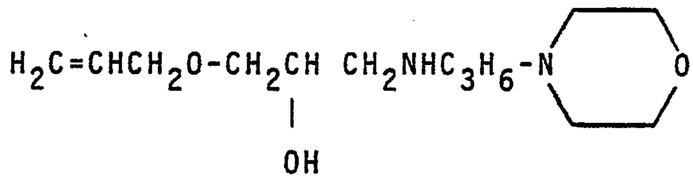

B. 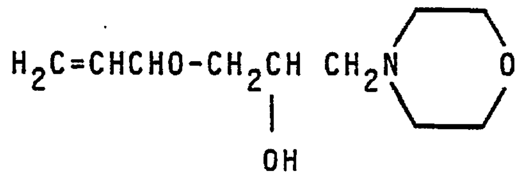

C. 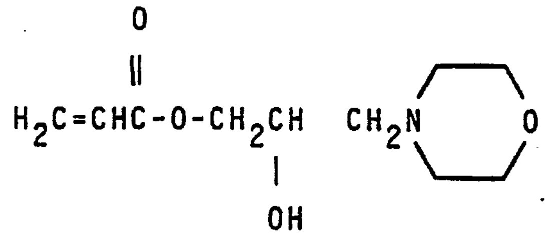

D. 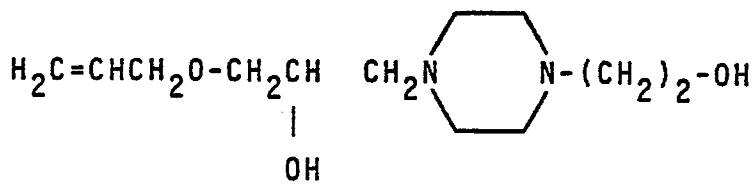

E. 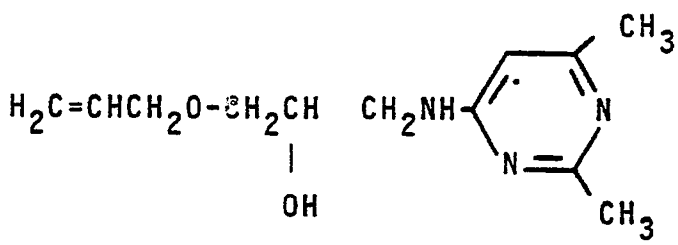

F. 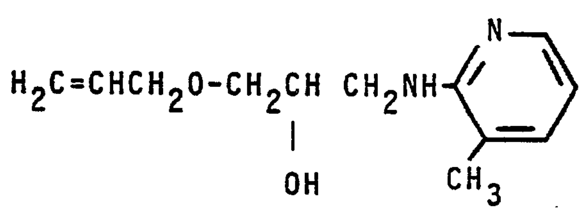

G. 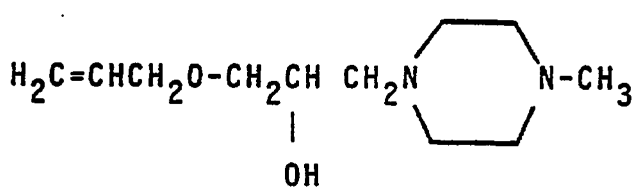

H. 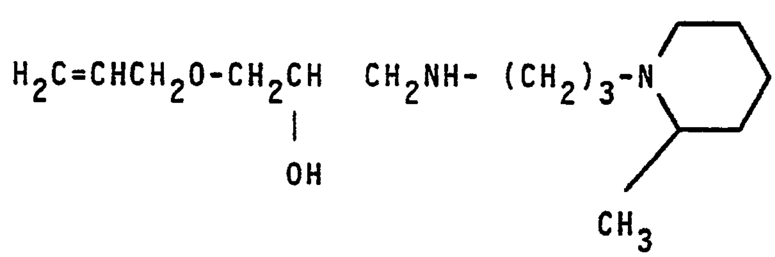

I. 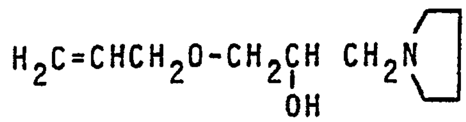

J. 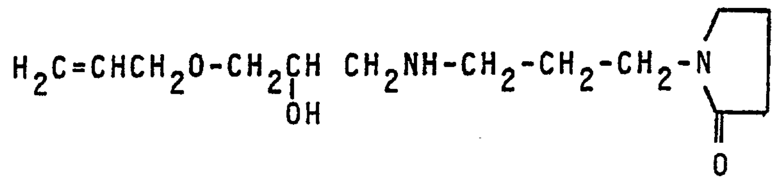

K. 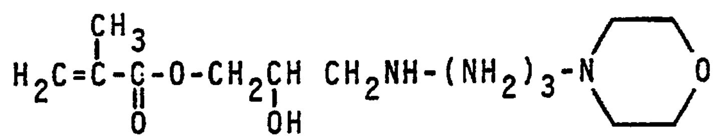

L. 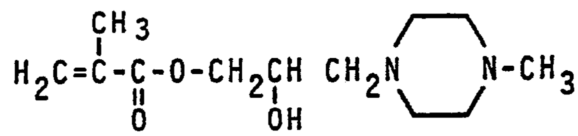

M. 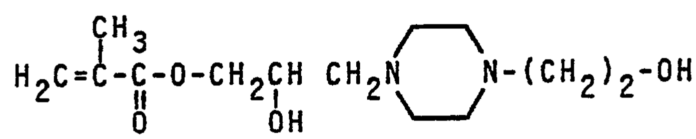

N. 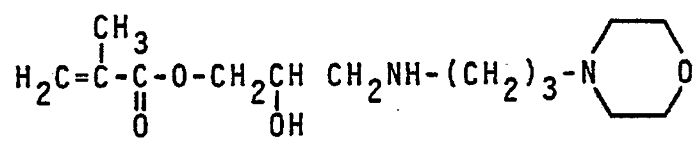

In accordance with the process, the so prepared monomers may be converted into a functionalized polymer. This may be effected by polymerizing the monomer to form a polymer:

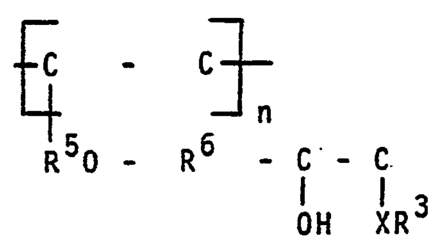

In another embodiment, the so prepared multifunctional monomer may be copolymerized with an ethylenically unsaturated polymerizable monomer (which forms a carbon-to-carbon backbone chain polymer containing residual unsaturation) having the formula

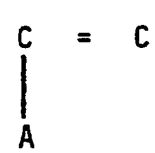

wherein A is hydrogen; hydrocarbon, (e.g. alkyl or aryl) typified by methyl, ethyl or phenyl; halogen typified by chlorine; $-COOR^7$ typified by $-COOCH_3$; etc. $R^7$ may be selected from the same group as is $R^4$ ; it is typically methyl.

Illustrative monomers which may be copolymerized may include ethylene, propylene, butylenes, vinyl chloride; styrene; methyl acrylate; methyl methacrylate; etc. When reaction is effected by copolymerization, the product polymer may be

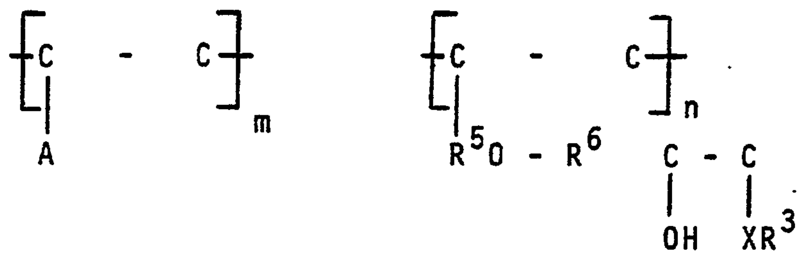

In this formula m may be 50 to 2000, preferably 50 to 1000, e.g. 80, and n may be 5 to 200, preferably 5 to 100, e.g. 8. The monomers may be present in amount of 0.5 to 30 mole %, preferably 1 to 6 mole %, say 4 mole % of the total polymer.

Polymerization of the monomer (dispersant monomer) to form polymer may be effected as by homogeneous polymerization in the presence of a free radical catalyst (e.g. azobisisobutyronitrile) in a solvent at 60 to 100°C, e.g. 80°C. In a typical reaction, a solution containing 50 parts by weight of monomer in 50 parts by weight of mineral oil plus 0.13 parts by weight of free-radical catalyst (e.g. azobisisobutyronitrile) may be maintained in the presence of nitrogen at 80°C and 0.2 MPa for 2 hours to yield 50 parts of product polymer of $\bar{M}_n$ 10,000 to 200,000, e.g. 100,000.

Copolymerization of the dispersant monomer with a copolymerizable monomer may be effected under generally the same conditions. When the copolymerizable monomer is a liquid e.g. methyl methacrylate, it may be present in the reaction vessel from the start of the reaction. When it is a gas, e.g. ethylene or propylene, it may be admitted over the course of the reaction which is carried out at high pressure (typically 69 to 280 MPa) in the presence of Zeigler-Natta catalyst. Product copolymer may contain 0.5 to 30 mole %, preferably 1 to 10 mole %, e.g. 8 mole % of groups derived from the dispersant monomer. The molecular weight $\bar{M}_n$ of the product may vary, depending upon the reaction conditions and the copolymerizable monomer. Generally it will be 10,000 to 200,000, preferably 20,000 to 150,000, e.g. 80,000.

The dispersant monomers may (in the preferred embodiment) be grafted onto a polymer in the presence of a free-radical initiator to form dispersant units on the polymer:

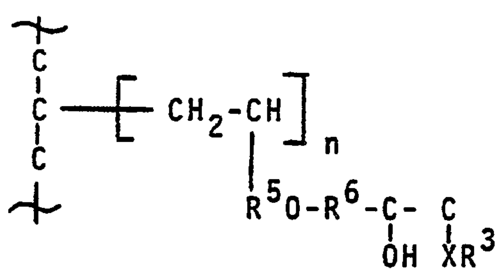

$$n \geqslant 1$$

The polymers, onto which the dispersant monomers of this invention may be grafted, may be an oil-soluble, substantially linear, carbon-carbon backbone polymer. Typical carbon-carbon backbone polymers prepared from monomers bearing an ethylenically unsaturated polymerizable double bond which may be employed include homopolymers or copolymers prepared from monomers having structural units of the formula

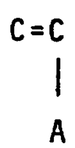 and/or 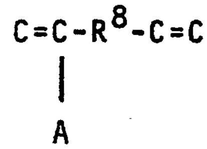

wherein A may be: hydrogen; halogen; hydrocarbyl such as alkyl or aryl, e.g. phenyl; alkoxycarbonyl or less preferred carboxy (typified by -COOR); halide; etc. $R^8$ may be a direct bond, or a divalent hydrocarbon group, e.g. alkylene, alkarylene, aralkylene, cycloalkylene or arylene.

Illustrative of such monomers are acrylates, methacrylates, vinyl halides (such as vinyl chloride), styrene, olefins such as propylene or butylene, vinyl acetate; and conjugated or non-conjugated dienes such as butadiene, isoprene, hexadiene or ethylidene norbornene. Homopolymers of olefins, (such as

polypropylene or polybutylene), dienes, (such as hydrogenated polyisoprene), or copolymers of ethylene with e.g. butylene and higher olefins, styrene with isoprene and/or butadiene may be employed. The preferred carbon-carbon backbone polymers include ethylene-propylene copolymers (EPM or EPR) and ethylenepropylene-diene terpolymers (EPDM or EPT).

When the charge polymer is an ethylene-propylene copolymer, it may be formed by copolymerization of ethylene and propylene under known conditions, preferably Ziegler-Natta reaction conditions. The preferred EPM copolymers contain units derived from ethylene in amount of 40 to 70 mole %, more preferably 50 to 60 mole %, e.g. 55 mole %, the remainder being derived from propylene.

The molecular weight $\bar{M}_n$ of the EPM copolymers may be 10,000 to 1,000,000, more preferably 20,000 to 200,000, e.g. 140,000. The molecular weight distribution (polydispersity index) $\bar{M}_w/\bar{M}_n$ is preferably less than 15, more preferably 1.2 to 10, e.g. 1.6.

Illustrative EPM copolymers, which may be employed include those set forth below, the first listed being preferred:

A. EPSYN (Copolymer Rubber and Chemical Corporation) containing 60 mole % of units derived from ethylene and 40 mole % of units derived from propylene, $\bar{M}_n$: 140,000, $\bar{M}_w/\bar{M}_n$: 1.6.

B. EPCAR 505 (B. F. Goodrich Co.), containing 50 mole % of units derived from ethylene and 50 mole % of units derived from propylene, $\bar{M}_n$: 25,000,$\bar{M}_w/\bar{M}_n$: 2.5.

C. ESPRENE (Sumitomo Chemical Co.), containing 55 mole % of units derived from ethylene and 45 mole % of units derived from propylene, $\bar{M}_n$: 25,000, $\bar{M}_w/\bar{M}_n$: 2.5

When the charge polymer is an ethylene-propylene-diene terpolymer (EPT or EPDM), it may be formed by copolymerization of ethylene, propylene and the diene, which is commonly a non-conjugated diene typified by dicyclopentadiene; 1,4-hexadiene; or ethylidene norbornene. Polymerization is effected under known conditions, generally comparable to those employed in preparing the EPM products. The preferred terpolymers contain units derived from ethylene in amount of 40 to 70 mole %, more preferably 50 to 65 mole %, e.g. 60 mole %, units derived from propylene in amount of 20 to 60 mole %, more preferably 30 to 50 mole %, e.g. 38 mole %, and units derived from diene in amount of 0.5 to 15 mole %, more preferably to 1 to 10 mole %, e.g. 2 mole %. The molecular weight $\bar{M}_n$ of the terpolymers may typically be 10,000 to 1,000,000, more preferably 20,000 to 200,000, e.g. 120,000. Molecular weight distribution of the useful polymers is preferably narrow, viz a $\bar{M}_w/\bar{M}_n$ of typically less than 15, more preferably 1.5 to 10, e.g. 2.2.

Illustrative EPT terpolymers are set forth below, the first listed being preferred:

A. EPSYN 4006 (Copolymer Rubber and Chemical Corp.), containing 58 mole % of units derived from ethylene, 40 mole % of units derived from propylene, and 2 mole % of units derived from ethylidene norbornene, $\bar{M}_n$: 120,000, $\bar{M}_w/\bar{M}_n$: 2.2

B. ORTHOLEUM 5655 (DuPont) containing 62 mole % of units derived from ethylene, 36 mole % of units derived from propylene, and 2 mole % of units derived from 1,4-hexadiene, $\bar{M}_n$ : 75,000 and $\bar{M}_w/\bar{M}_n$: 2.

C. ORTHOLEUM 2052 brand containing 62 mole % of units derived from ethylene, 36 mole % of units derived from propylene, and 2 mole % of units derived from 1,4-hexadiene, $\bar{M}_n$ : 35,000 and polydispersity $\bar{M}_w/\bar{M}_n$: 2.

D. ROYALENE (Uniroyal) containing 60 mole % of units derived from ethylene, 37 mole % of units derived from propylene, and 3 mole % of units derived from dicyclopentadiene, $\bar{M}_n$: 100,000 and $\bar{M}_w/\bar{M}_n$: 2.5.

E. EPSYN 40A (Copolymer Rubber and Chemical Corp.), containing 60 mole % of units derived from ethylene, 37 mole % of units derived from propylene, and 3 mole % of units derived from ethylidene norbornene, $\bar{M}_n$: 140,000 and $\bar{M}_w/\bar{M}_n$: 2.

The EPM and EPT polymers may contain minor portions (typically less than 30%) of other units derived from other copolymerizable monomers.

The grafting of the dispersant monomer may be carried out in the following manner. The polymer onto which the dispersant monomer is to be grafted is added to the diluent-solvent in a reaction vessel and heated at 80 to 160°C to form a homogenous solution. The dispersant monomer and free radical initiator, preferably in a molar ratio of monomer to initiator of 1:1 to 8:1, more preferably 1.5:1 to 5:1, are added. The temperature of the solution is maintained above the decomposition temperature of the initiator, e.g. for 0.25 to 5 hours, more preferably 0.4 to 2 hours, under an inert atmosphere to form the desired product.

In a typical grafting reaction, a solution containing 25 parts by weight of ethylene-propylene copolymer and 75 parts by weight of solvent, such as hexane or mineral oil, is prepared. Then 2.5 parts by weight of a dispersant monomer and 1 part by weight of dicumyl peroxide are added and maintained in the presence of nitrogen at temperature of 155 ± 5°C and atmospheric pressure (when mineral oil is a solvent), or a pressure of 1.5 MPa (when hexane is the solvent), for 1 hour. Enough mineral oil is then added

to obtain a fluid concentrate at room temperature. When the grafting is carried out in hexane, a stripping step is included.

The product grafted polymer may contain 0.3 to 20 mole %, more preferably 0.5 to 10 mole %, e.g. 2 mole % derived from the dispersant monomer.

Free radical initiators, such as dicumyl peroxide, dibenzoyl peroxide, di-t-butyl peroxide, azobisisobutyronitrile, diacetyl peroxide, t-butyl-peracetate, or diisopropyl peroxydicarbonate may be employed in the process.

The polymer products contain a moiety derived from the dispersant monomer. It is a particular feature, when the product is to be used as a lubricating oil additive, that the polymer is preferably one which has been employed in the absence of modification with the dispersant monomer in lubricating oil to attain desired improvements, e.g. in viscosity index. Typical viscosity index improving polymers include polyolefins, typified by ethylene-propylene copolymers; EPT ethylene-propylene-termonomer (typically diene) polymers; ethylene-vinyl acetate copolymers; or polymethacrylates.

The dispersant additive may impart dispersant properties to this polymer (in addition to its VI improving properties). This may be effected by: (i) mixing the polymerized dispersant additive with the VI-improving polymer; (ii) copolymerizing the dispersant monomer with the monomer from which the VI-improving polymer is formed; or (iii) grafting dispersant additive onto the VI-improving polymer. In this manner it is possible to attain a system characterized by both VI-improving properties and improved dispersancy properties.

The polymeric products may be added to lubricating oil compositions to impart thereto improvements in viscosity index and in dispersancy. Typical lubricating oils to which the additives of this invention may be added include summer or winter automotive lubricating oils, airplane engine oils, and railway diesel oils, whether hydrocarbon-derived or synthetic. Typically the polymer additive may be present in minor effective, viscosity index improving, amount, e.g. 0.1 to 20 weight %, more preferably 0.5 to 20 weight %, e.g. 1 weight %. This may correspond to presence of groups derived from the dispersant monomer in amount of 0.01 to 0.6 weight %, more preferably 0.03 to 0.20 weight %, e.g. 0.08 weight %.

Addition of the polymeric additive to a lubricating oil may be facilitated by use of a concentrate containing 2 to 30 weight %, more preferably 6 to 20 weight %, e.g. 9 weight % of additive in a diluent-solvent which may, in the preferred embodiment, be the same as the lubricating oil in which the additive is to be formulated.

It is a feature of this invention that the improved lubricating oils are characterized by improved dispersancy, as measured in the Bench VC Test. In the Bench VC Test, dispersancy relative to three references is tested. The reference blends are known to possess an excellent dispersancy, a good dispersancy, and a poor dispersancy. Better dispersants are characterized by lower ratings; and a rating at around the "good" standard is indicative of a promising candidate.

In the following Examples, all parts and percentages are by weight, unless otherwise specified. Examples 1 to 13 illustrate the production of ethylenically unsaturated compounds; Examples 14 to 27 illustrate the formation of polymers from these compounds; Examples 28 to 41 illustrate the properties of such polymers.

EXAMPLE 1

5.7 g (0.05 moles) of allyl glycidyl ether and 9.0 g (0.05 moles) of liquid N-(3-aminopropyl) morpholine are added to a reaction vessel. The system is purged with nitrogen and slowly heated to 100°C and then maintained at 100 to 120°C for one hour, followed by cooling to room temperature. The product monomer is used for graft polymerization without further purification.

EXAMPLES 2 to 8

In each of these Examples, the procedure of Example 1 is followed, except that the amine is varied.

EXAMPLE 2

The amine is morpholine 4.4g (0.05 moles).

EXAMPLE 3

The amine is 2,6-dimethyl-morpholine 5.75g (0.05 moles), added as a solution in 5.7g of octanol.

EXAMPLE 4

The amine is 2-amine-3-picoline 5.3g (0.05 moles).

EXAMPLE 5

The amine is 4-amino-2,6-dimethyl pyrimidine 6.2g (0.05 moles), added as a solution in 25.0 parts of octanol.

EXAMPLE 6

The amine is N-methyl-piperazine 5.0 parts (0.05 moles).

EXAMPLE 7

The amine is 1-(3-amino-propyl)-2-pipecoline 7.8 parts (0.05 moles).

EXAMPLE 8

The amine is N-hydroxyethyl-piperazine 6.5 parts (0.05 moles).

EXAMPLE 9

The procedure of Example 1 is followed, except that the unsaturated epoxide is glycidyl methacrylate 7.1 parts (0.05 moles) and the amine is N-methyl-piperazine 5.0 parts (0.05 moles).

EXAMPLE 10

The procedure of Example I is followed, except that the unsaturated epoxide is glycidyl methacrylate 7.1 parts (0.05 moles) and the amine is 1-(3-aminopropyl)-2-pipecoline 7.8 parts (0.05 moles).

EXAMPLE 11

The procedure of Example I is followed, except that the unsaturated epoxide is glycidyl methacrylate 7.1 parts (0.05 moles) and the amine is N-hydroxyethyl-piperazine 6.5 parts (0.05 moles).

EXAMPLE 12

The procedure of Example 1 is followed, except that the unsaturated epoxide is glycidyl methacrylate 7.1 parts (0.05 moles).

EXAMPLE 13

The procedure of Example 1 is followed, except that the amine is pyrrolidine 3.5 parts (0.05 moles).

EXAMPLES 14 to 27

In each of Examples 14 to 27, the monomer product of one of Examples 1 to 13 is grafted onto an EPR ethylene- propylene copolymer ($\bar{M}_n$ 80,000) containing 60 mole % of units derived from ethylene and 40 mole % of units derived from propylene. The EPR is added as a 24 weight % solution in hexane; the system is purged with nitrogen and heated to 155°C at 1.475 MPa. Monomer as prepared in Examples 1 to 13 is added followed by 25 weight % dicumyl peroxide in hexane. The mixture is stirred at 155°C for 1 hour and the solvent hexane is exchanged with 1076 parts of solvent neutral oil (SNO-5) to give a solution containing about 8.5 weight % polymer. This solution is used as is for addition to lubricating oils and further testing. The amount of monomer and of dicumyl peroxide are shown in the Table below.

EXAMPLES 28 to 41

The products of Examples 14 to 27 were tested for dispersancy by the Bench VC Test (BVCT), at a concentration of 10 weight % in a fully formulated oil having the following properties and composition:

| Component | Parts by Wt. |
|---|---|
| Solvent neutral oil A | 75.25 |
| Solvent neutral oil B | 21.64 |
| Zinc Dialkyldithiophosphate | 1.22 |
| 4,4'-dinonyldiphenylamine | .39 |
| Overbased magnesium sulphonate | 1.50 |
| Silicone antifoamant | 150 ppm |
| Analyses | |
| Viscosity Kin 40°C cS | 30.4 |
| Viscosity Kin 100°C cS | 5.33 |
| Pour Point, °C | -12 |
| Ash Sulfated, % D874 | 0.88 |
| Phosphorus, % X-Ray | 0.12 |
| Sulfur, % X-Ray Total | 0.32 |
| Zinc, % X-Ray | 0.13 |
| Magnesium, % | 0.15 |
| CC Simulator-18C | 1400 |

Oil A had a specific gravity (15/15°C) of 0.858 to 0.868; Viscosity (38°C) of 123 to 133 SUS; Pour Point −18°C. Oil B had a specific gravity (15/15°C) of 0.871 to 0.887; Viscosity (38°C) of 325 to 350 SUS; Pour Point - 18°C. Zinc salt is a salt of mixed alcohols - isopropanol and $P_2S_5$ product as described in US-A-3293181. The overbased magnesium sulphonate had a TBN of 395 and is a salt of branched $C_{20}$-$C_{40}$ mono-alkylbenzene sulphonic acid (mw 530-540) together with about 10% magnesium carbonate, 14% magnesium hydroxide and 4% magnesium sulfate.

As the next Table shows, the VI improvers of Examples 14 to 27 were good dispersants. Most of them performed better than the second good reference standard.

| Example | Polymer Product Example | Monomer | | Dicumyl Peroxide Parts* | BVCT | | | |
|---|---|---|---|---|---|---|---|---|
| | | Example | Parts* | | Sample Rating | Standards | | |
| | | | | | | Excellent | Good | Poor |
| 28 | 14 | 1 | 6.0 | 2.4 | 31.5 | 13.3 | 48.3 | 74.9 |
| 29 | 15 | 2 | 6.0 | 2.4 | 49.5 | 14.1 | 54.1 | 77.2 |
| 30 | 16 | 3 | 6.0 | 2.4 | 55.9 | 14.7 | 47.2 | 68.8 |
| 31 | 17 | 4 | 20.0 | 8.0 | 32.7 | 16.8 | 41.5 | 60.6 |
| 32 ** | 18 | 5 | 12.0 | 5.0 | 30.9 | 16.0 | 43.6 | 61.3 |
| 33 ** | 19 | 5 | 6.0 | 2.4 | 37.9 | 19.8 | 44.2 | 61.7 |
| 34 | 20 | 6 | 6.0 | 2.4 | 44.1 | 8.9 | 27.4 | 73.0 |
| 35 | 21 | 7 | 10.0 | 4.0 | 28.2 | 9.0 | 23.0 | 66.0 |
| 36 | 22 | 7 | 10.0 | 4.0 | 45.2 | 10.6 | 25.4 | 64.2 |
| 37 | 23 | 9 | 10.0 | 4.0 | 23.8 | 11.1 | 20.0 | 61.7 |
| 38 | 24 | 10 | 10.0 | 4.0 | 22.3 | 16.5 | 38.1 | 68.1 |
| 39 | 25 | 11 | 10.0 | 4.0 | 34.2 | 9.5 | 32.0 | 68.0 |
| 40 | 26 | 12 | 10.0 | 4.0 | 25.8 | 8.0 | 29.4 | 68.0 |
| 41 | 27 | 13 | 15.0 | 6.0 | 39.9 | 9.8 | 37.2 | 56.6 |

* Parts per 100 parts of Polymer

** Example 33 is a duplication of Example 32 with a variation (as noted in the Table) of. the parts of monomer and of dicumyl peroxide.

It will be apparent to those skilled in the art that the products of the present invention are characterized by satisfactory ratings on the BVCT.

The products of Examples 14, 15, 17 and 18 containing grafted EPR were tested as viscosity index improvers in a conventional mineral lubricating oil at concentration of 11.5 weight % (1 weight % of grafted EPR). The results are shown in the following Table. As seen, the kinematic viscosity at 40°C and 100°C, and thickening power at 100°C for the grafted EPR in Examples 14 to 18 are comparable to those for ungrafted EPR in the commercial VI improver.

TABLE

| VI Improver Example | Example of Grafted Monomer | Kinematic Viscosity cSt 40°C | Kinematic Viscosity cSt 100°C | Thickening* Power 100°C |
|---|---|---|---|---|
| Commercial | - | 69.0 | 11.5 | 6.7 |
| 14 | 1 | 68.2 | 11.2 | 6.4 |
| 15 | 2 | 65.3 | 10.9 | 6.0 |
| 17 | 4 | 68.0 | 11.2 | 6.4 |
| 18 | 5 | 68.3 | 11.4 | 6.6 |

* Thickening power is a measure of increasing the kinematic viscosity of oil after addition of 11.5 weight % of VI improver (1 weight % polymer).

## Claims

1. A lubricating composition containing a major portion of lubricating oil and an additive, characterized in that the additive is a polymer comprising repeating units derived from an ethylenically unsaturated monomer prepared by reacting,

(i) a first reactant containing ethylenic unsaturation and an epoxide moiety, with

(ii) a second reactant containing a group of the formula

$-NH_2$, $-NHR^4$, -OH, -SH or -COOH

in which $R^4$ is an alkyl, aralkyl, alkaryl, cycloalkyl or aryl group.

2. A lubricating composition according to Claim 1, characterized in that the first reactant has the formula

$$(C{=}\overset{R^1}{\overset{|}{C}})_a\ (R^2)_b\ (R^5O)_d\ R^6\ (\overset{O}{\widehat{C - C}})_c$$

in which

C=C is an ethylenically unsaturated double bond;

$R^5$ or $R^6$ is alkylene, alkarylene, aralkyl, cycloalkylene or arylene;

$R^1$ is hydrogen, alkyl, aralkyl, alkaryl, cycloalkyl or aryl;
$R^2$ is a divalent moiety having the formula -COO- or $-R^5-$ ;
<u>a</u> is an integer greater than 0;
<u>b</u> is 0 or 1;
<u>c</u> is 1, 2 or 3; and
<u>d</u> is 0 or 1.

3. A lubricating composition according to Claim 1 or 2, characterized in that the first reactant contains a structural unit of the formula

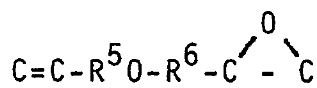

in which $R^5$ and $R^6$ have the meanings given above.

4. A lubricating composition according to any preceding Claim, characterized in that the second reactant has the formula $HXR^3$ wherein
$R^3$ is hydrogen, alkyl, aralkyl, alkaryl, cycloalkyl, aryl or heterocyclic;
X is -COO-, -S-, $-NHR^4$, -NH or -O-; and
$R^4$ is alkyl, aralkyl, alkaryl, cycloalkyl or aryl.

5. A lubricating composition according Claim 1, characterized in that the monomer has the formula

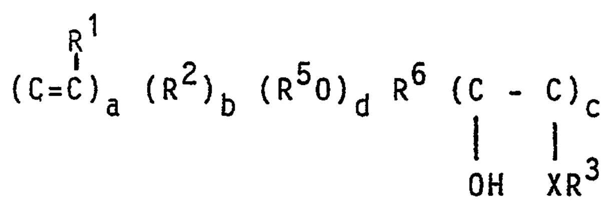

in which
C=C is an ethylenically unsaturated double bond;
$R^5$ or $R^6$ is alkylene, alkarylene, aralkyl, cycloalkylene or arylene;
$R^1$ is hydrogen, alkyl, aralkyl, alkaryl, cycloalkyl or aryl;
$R^2$ is a divalent moiety having the formula -COO- or $-R^5-$ ;
<u>a</u> is an integer greater than 0;
<u>b</u> is 0 or 1;
<u>c</u> is 1, 2 or 3; and
<u>d</u> is 0 or 1.
X is -COO-, -S-, $-NR^4$, -NH or -O-;
$R^4$ is alkyl, aralkyl, alkaryl, cycloalkyl or aryl; and
$R^3$ is hydrogen, alkyl, aralkyl, alkaryl, cycloalkyl, aryl or heterocyclic.

6. A lubricating composition according Claim 1, characterized in that the monomer has one of the formulae A to N set out herein.

7. A lubricating composition according any of the preceding Claims, characterized in that the polymer is a homopolymer.

8. A lubricating composition according any of the Claims 1 to 6, characterized in that the polymer is a copolymer containing units derived from:
(i) an ethylenically unsaturated polymerizable monomer of the formula C=CA in which A is hydrogen, hydrocarbon, halogen or $-COOR^7$ in which $R^7$ is hydrocarbon; and
(ii) units derived from the monomer.

9. A lubricating composition according any of the Claims 1 to 6, characterized in that the polymer is a graft polymer containing a carbon-carbon backbone having residual unsaturation and having units derived from the monomer graft polymerized thereon.

10. A lubricating composition according any of the preceding Claims, characterized in that the additive is present in an amount from 2 to 30 percent by weight.

**Patentansprüche**

1. Schmiermittelzusammensetzung, die einen Hauptanteil Mineralöl und ein Additiv enthält, dadurch gekennzeichnet, daß das Additiv ein Polymer mit Grundeinheiten ist, die von einem olefinisch ungesättigten Monomer abgeleitet sind, hergestellt durch Umsetzen
(i) eines ersten Reaktanten, der olefinische Ungesättigtheit und eine Epoxideinheit enthält, mit
(ii) einem zweiten Reaktanten, der eine Gruppe der Formel

-$NH_2$, - $NHR^4$, -OH, -SH oder -COOH
enthält, in der $R^4$ eine Alkyl-, Aralkyl-, Alkaryl-, Cycloalkyl- oder Arylgruppe ist.

2. Schmiermittelzusammensetzung nach Anspruch 1, dadurch gekennzeichnet, daß der erste Reaktant die Formel

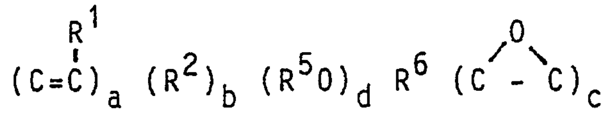

besitzt, in der
C=C eine olefinisch ungesättigte Doppelbindung ist;
$R^5$ oder $R^6$ Alkylen, Alkarylen, Aralkyl, Cycloalkylen oder Arylen ist;
$R^1$ Wasserstoff, Alkyl, Aralkyl, Alkaryl, Cycloalkyl oder Aryl ist;
$R^2$ eine zweiwertige Einheit mit der Formel -COO- oder -$R^5$- ist;
a eine ganze Zahl größer als 0 ist;
b 0 oder 1 ist;
c 1, 2 oder 3 ist; und
d 0 oder 1 ist;

3. Schmiermittelzusammensetzung nach Anspruch 1 oder 2, dadurch gekennzeichnet, daß der erste Reaktant eine Struktureinheit der Formel

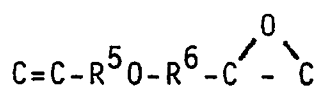

enthält, in der $R^5$ oder $R^6$ dieselben Bedeutungen wie oben angegeben haben.

4. Schmiermittelzusammensetzung nach einem vorangehenden Anspruch, dadurch gekennzeichnet, daß der zweite Reaktant die Formel $HXR^3$ besitzt, wobei
$R^3$ Wasserstoff, Alkyl, Aralkyl, Alkaryl, Cycloalkyl, Aryl oder heterozyklisch ist;
X -COO-, -S-, -$NHR^4$, -NH oder -O- ist; und
$R^4$ Alkyl, Aralkyl, Alkaryl, Cycloalkyl oder Aryl ist.

5. Schmiermittelzusammensetzung nach Anspruch 1, dadurch gekennzeichnet, daß das Monomer die Formel

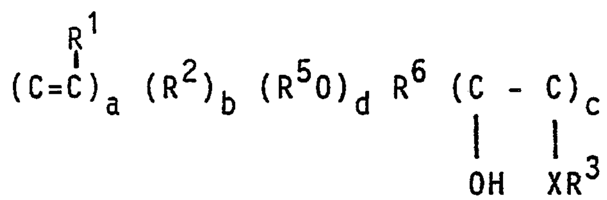

besitzt, in der
C=C eine olefinisch ungesättigte Doppelbindung ist;
$R^5$ oder $R^6$ Alkylen, Alkarylen, Aralkylen, Cycloalkylen oder Arylen ist;
$R^1$ Wasserstoff, Alkyl, Aralkyl, Alkaryl, Cycloalkyl oder Aryl ist;
$R^2$ eine zweiwertige Einheit mit der Formel -COO- oder -$R^5$- ist;
a eine ganze Zahl größer als 0 ist;
b 0 oder 1 ist;
c 1, 2 oder 3 ist; und
d 0 oder 1 ist;
X -COO-, -S-, -$NR^4$, -NH oder -O- ist;
$R^4$ Alkyl, Aralkyl, Alkaryl, Cycloalkyl oder Aryl ist; und
$R^3$ Wasserstoff, Alkyl, Aralkyl, Alkaryl, Cycloalkyl, Aryl oder heterozyklisch ist.

6. Schmiermittelzusammensetzung nach Anspruch 1, dadurch gekennzeichnet, daß das Monomer eine der Formeln A bis N besitzt, die hierin angegeben sind.

7. Schmiermittelzusammensetzung gemäß einem der vorangehenden Ansprüche, dadurch gekennzeichnet, daß das Polymer ein Homopolymer ist.

8. Schmiermittelzusammensetzung nach einem der Ansprüche 1-6, dadurch gekennzeichnet, daß das Polymer ein Kopolymer ist, das Einheiten enthält, die abgeleitet sind von:
(i) einem olefinisch ungesättigten polymerisierbaren Monomer der Formel C=CA, in der A Wasser-

stoff, Kohlenwasserstoff, Halogen oder -$COOR^7$ ist, wobei $R^7$ Kohlenwasserstoff ist; und
(ii) von diesem Monomer abgeleiteten Einheiten.

9. Schmiermittelzusammensetzung nach einem der Ansprüche 1-6, dadurch gekennzeichnet, daß das Polymer ein Pfropfpolymer ist, das eine Kohlenstoff-Kohlenstoff-Hauptkette enthält, die Restungesättigtkeit besitzt und Einheiten besitzt, die von dem darauf pfropfpolymerisierten Monomer abgeleitet sind.

10. Schmiermittelzusammensetzung nach einem der vorangehenden Ansprüche, dadurch gekennzeichnet, daß das Additiv in einer Menge von 2 bis 30 Gewichtsprozenten vorhanden ist.

## Revendications

1. Composition lubrifiante, contenant une proportion majeure d'une huile lubrifiante et un additif, caractérisée en ce que l'additif est un polymère comprenant des motifs de base, dérivés d'un monomère à insaturation éthylénique préparé en faisant réagir:
(i) un premier réactif à insaturation éthylénique et à groupe époxy, avec
(ii) un deuxième réactif contenant un groupe de formule:
-$NH_2$, -$NHR^4$, -OH, -SH ou -COOH,
dans laquelle $R^4$ représente un groupe alkyle, aralkyle, alkaryle, cycloalkyle ou aryle.

2. Composition lubrifiante selon la revendication 1, caractérisée en ce que le premier réactif, correspond à la formule:

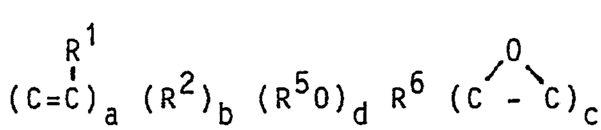

dans laquelle:
C=C représente une double liaison insaturée éthylénique;
$R^5$ ou $R^6$ représente un groupe alkylène, alkarylène, aralkyle, cycloalkylène ou arylène;
$R^1$ représente un atome d'hydrogène, un groupe alkyle, aralkyle, alkaryle, cycloalkyle ou aryle;
$R^2$ représente un groupe bivalent, de formule -COO- ou -$R^5$-;
<u>a</u> représente un entier supérieur à 0;
<u>b</u> est égal à 0 ou 1;
<u>c</u> est égal à 1, 2 ou 3; et
<u>d</u> est égal à 0 ou 1.

3. Composition lubrifiante selon la revendication 1 ou 2, caractérisée en ce que le premier réactif contient un groupe de base de formule:

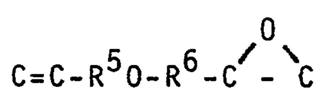

dans laquelle $R^5$ et $R^6$ ont les mêmes définitions que ci-dessus.

4. Composition lubrifiante selon l'une quelconque des revendications précédentes, caractérisée en ce que le deuxième réactif, correspond à la formule $HXR^3$, dans laquelle:
$R^3$ représente un atome d'hydrogène, un groupe alkyle, aralkyle, alkaryle, cycloalkyle, aryle ou hétérocyclique;
X représente un groupe -COO-, -S-, -$NHR^4$, -NH ou -O- ; et
$R^4$ représente un groupe alkyle, aralkyle, alkaryle, cycloalkyle ou aryle.

5. Composition lubrifiante selon la revendication 1, caractérisée en ce que le monomère correspond à la formule:

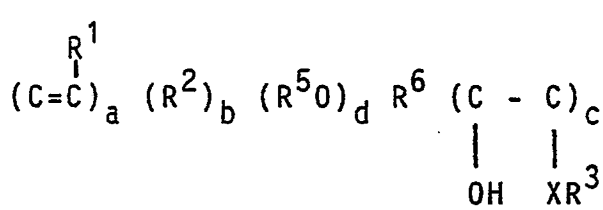

dans laquelle:
C=C représente une double liaison insaturée éthylénique;
$R^5$ ou $R^6$ représente un groupe alkylène, alkarylène, aralkyle, cycloalkylène ou arylène;

$R^1$ représente un atome d'hydrogène, un groupe alkyle, aralkyle, alkaryle, cycloalkyle ou aryle;
$R^2$ représente un groupe bivalent, de formule -COO- ou -$R^5$- ;
a représente un nombre entier supérieur à 0 ;
b est égal à 0 ou 1 ;
c est égal à 1, 2 ou 3 ; et
d est égal à 0 ou 1
X représente un groupe -COO-, -S-, -$NR^4$-, -NH ou O- ;
$R^4$ représente un groupe alkyle, aralkyle, alkaryle, cycloalkyle ou aryle ; et
$R^3$ représente un atome d'hydrogène, un groupe alkyle, aralkyle, alkaryle, cycloalkyle, aryle ou un groupe hétérocyclique.

6. Composition lubrifiante selon la revendication 1, caractérisée en ce que le monomère correspond à l'une des formules A à N illustrées ci-dessus.

7. Composition lubrifiante selon l'une quelconque des revendications précédentes, caractérisée en ce que le polymère est un homopolymère.

8. Composition lubrifiante selon l'une quelconque des revendications 1 à 6, caractérisée en ce que le polymère est un copolymère contenant des motifs dérivés:
(i) d'un monomère polymérisable à insaturation éthylénique, de formule C=CA dans laquelle A représente un atome d'hydrogène, un groupe hydrocarboné, un atome d'halogène, ou un groupe -$COOR^7$ dans lequel $R^7$ représente un groupe hydrocarboné ; et
(ii) de motifs dérivés du monomère.

9. Composition lubrifiante selon l'une quelconque des revendications 1 à 6, caractérisée en ce que le polymère est un polymère greffé contenant un squelette carbone-carbone à insaturation résiduelle et comportant des motifs dérivés du monomère polymérisé par greffage sur celui-ci.

10. Composition lubrifiante selon l'une quelconque des revendications précédentes, caractérisée en ce que l'additif est présent selon une quantité de 2 à 30 % en poids.